(19) Europäisches Patentamt
European Patent Office
Office européen des brevets

(11) Veröffentlichungsnummer: **0 160 169**
**B1**

(12) **EUROPÄISCHE PATENTSCHRIFT**

(45) Veröffentlichungstag der Patentschrift: **29.04.87**

(51) Int. Cl.⁴: **C 08 G 18/38**, C 08 G 18/10, C 08 G 18/08, C 08 G 18/80, C 09 D 5/44, C 07 C 125/06

(21) Anmeldenummer: **85101797.0**

(22) Anmeldetag: **19.02.85**

(54) **Wässrige Lösungen oder Dispersionen von kationischen Oligourethanen ein Verfahren zu ihrer Herstellung und ihre Verwendung zur Herstellung von Überzügen.**

(30) Priorität: **27.02.84 DE 3406998**

(43) Veröffentlichungstag der Anmeldung: **06.11.85 Patentblatt 85/45**

(45) Bekanntmachung des Hinweises auf die Patenterteilung: **29.04.87 Patentblatt 87/18**

(84) Benannte Vertragsstaaten: **BE DE FR GB IT NL SE**

(56) Entgegenhaltungen: **FR-A-2 426 718**
**FR-A-2 449 736**

(73) Patentinhaber: **BAYER AG, Konzernverwaltung RP Patentabteilung, D-5090 Leverkusen 1 Bayerwerk (DE)**

(72) Erfinder: **Noll, Klaus, Dr., Morgengraben 6, D-5000 Koeln 80 (DE)**
Erfinder: **Potter, Terry, Dr., 83 East Benjamin Drive, New Martinsville, W. Va. 26155 (US)**
Erfinder: **Pedain, Josef, Dr., Haferkamp 6, D-5000 Koeln 80 (DE)**
Erfinder: **Schwindt, Jürgen, Dr., von- Böttinger-Strasse 14, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1987

**Beschreibung**

Die vorliegende Erfindung betrifft wäßrige Lösungen oder Dispersionen von vernetzbaren, kationischen Polyurethanen, die über Urethangruppen eingebaute, reversibel blockierte Aminogruppen aufweisen, ein Verfahren zur Herstellung dieser Lösungen oder Dispersionen, sowie ihre Verwendung zur Herstellung von Überzügen auf hitzeresistenten Substraten, insbesondere auf Metallen durch kathodische Abscheidung.

Reversibel blockierte Aminogruppen aufweisende Reaktionspartner für organische Polyisocyanate mit gegebenenfalls blockierten Isocyanatgruppen sind bereits bekannt. So beschreibt beispielsweise die DE-AS 1 520 139 hitzevernetzbare, zu Polyharnstoffen aushärtende Zweikomponentensysteme, in denen eine Komponente freie Isocyanatgruppen und die andere Komponente reversibel blockierte Aminogruppen in Form von Aldimin- bzw. Ketimingruppen enthält. Die DE-AS 1 694 237 beschreibt hitzevernetzbare Kombinationen aus NCO-Prepolymeren mit Phenolblockierten Isocyanatgruppen und Ket- und/oder Enamingruppen aufweisenden aliphatischen oder aromatischen Verbindungen.

Es wurde nun überraschenderweise gefunden, daß auch bestimmte, nachstehend näher beschriebene, durch Michael-Addition von sekundären Aminen an bestimmte Acrylsäure-Derivate entstandene tert. Amine einerseits verkappte sekundäre Amine darstellen, die bei Raumtemperatur mit Polyisocyanaten mit blockierten Isocyanatgruppen nicht reagieren und bei mäßig erhöhten Temperaturen von ca. 90-130°C mit diesen unter Harnstoffbildung abreagieren, und die andererseits mit Quaternierungsmitteln und insbesondere organischen oder anorganischen Säuren in quaternäre und insbesondere ternäre Ammoniumgruppen überführt werden können, so daß (i) Oligourethane, die sowohl verkappte Isocyanatgruppen als auch quaternäre und insbesondere ternäre Ammoniumgruppen der genannten Art aufweisen, oder daß (ii) Oligourethane, die quaternäre und insbesondere ternäre Ammoniumgruppen der genannten Art aufweisen, in Kombination mit blockierten Polyisocyanaten in Wasser lösliche oder dispergierbare selbstvernetzende Bindemittel für aus wäßriger Phase zu verarbeitende Beschichtungsmittel darstellen, die insbesondere auf metallische Substrate durch kathodische Abscheidung aufgetragen werden können.

Gegenstand der Erfindung sind somit gegebenenfalls blockierte Polyisocyanate enthaltende wäßrige Lösungen oder Dispersionen von kationischen, bei erhöhter Temperatur vernetzbaren Oligourethanen, dadurch gekennzeichnet, daß die Oligourethane

a) einen Gehalt an ternären oder quaternären Ammoniumionen (berechnet als Stickstoff, Atomgewicht = 14) in Form von über Urethangruppen endständig und/oder innerhalb des Moleküls eingebauten Struktureinheiten der Formel

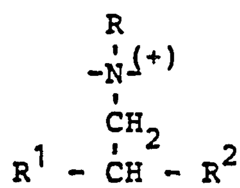

von 0,1 bis 3 Gew.-%, wobei

R für Wasserstoff oder einen aliphatischen, cycloaliphatischen oder araliphatischen Rest steht, wie er bei der Quaternierung von tert. Stickstoffatomen mit Alkylierungs-, Cycloalkylierungs- oder Aralkylierungsmitteln am tert. Stickstoffatom fixiert wird,

$R^1$ für Wasserstoff oder einen Alkylrest mit 1 bis 4 Kohlenstoffatomen steht,

$R^2$ für $-C\equiv N$, $-CO-NH_2$, $-CO-NHR^3$, $-CO-NR^3_2$ oder $-COOR^3$ steht, wobei

$R^3$ einen, gegebenenfalls inerte Substituenten aufweisenden, einwertigen Kohlenwasserstoffrest bedeutet,

b) einen Gehalt an tert. Aminostickstoffatomen (Atomgewicht = 14) in Form von über Urethangruppen endständig und/oder innerhalb des Moleküls eingebauten Struktureinheiten der Formel

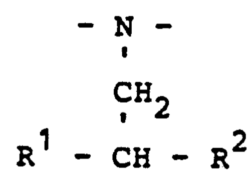

von 0 bis 2,8 Gew.-%, wobei
$R^1$ und $R^2$ die bereits genannte Bedeutung haben und
c) einen Gehalt an blockierten Isocyanatgruppen (berechnet als NCO) von 0 bis 15 Gew.-%,
aufweisen, mit der Maßgabe, daß der Gehalt an
a) ternären Ammoniumgruppen,
b) tert. Aminstickstoffatomen und
c) der Summe der im Oligourethan eingebauten und in dem blockierten Polyisocyanat enthaltenen, blockierten Isocyanatgruppen einem Äquivalentverhältnis von (a + b):c von 1:1 bis 1:1,5 entspricht.

Gegenstand der Erfindung ist auch ein Verfahren zur Herstellung dieser Lösungen oder Dispersionen, welches dadurch gekennzeichnet ist, daß man
i) ein, gegebenenfalls Urethangruppen aufweisendes organisches Polyisocyanat, dessen Isocyanatgruppen gegebenenfalls teilweise in blockierter Form vorliegen, mit Verbindungen der Formel

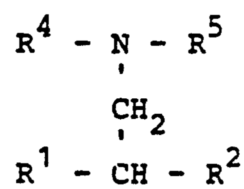

in welcher
$R^1$ und $R^2$ die obengenannte Bedeutung haben und
$R^4$ und $R^5$ für gleiche oder verschiedene Reste stehen und Kohlenwasserstoffreste mit 1 - 20 Kohlenstoffatomen oder, mindestens eine alkoholische Hydroxylgruppe als Substituenten aufweisende Kohlenwasserstoffreste mit 2 bis 20 Kohlenstoffatomen bedeuten, mit der Maßgabe, daß mindestens einer der Reste $R^4$ oder $R^5$ mindestens eine alkoholische Hydroxylgruppe aufweist,
unter Einhaltung eines Äquivalentverhältnisses von freien Isocyanatgruppen zu Hydroxylgruppen von 0,7:1 bis 2,5:1 unter Urethanbildung zur Reaktion bringt,
ii) die tert. Aminstickstoffatome der so erhaltenen Oligourethane durch Neutralisation mit einer Säure oder durch Quaternierung mit einem Quaternierungsmittel teilweise in quaternäre und/oder zumindest teilweise in ternäre Ammoniumgruppen überführt und
iii) die so erhaltenen kationischen Oligourethane in einem wäßrigen Milieu auflöst oder dispergiert,
wobei man gegebenenfalls zu einem beliebigen Zeitpunkt im Verlauf der Herstellung der wäßrigen Lösung oder Dispersion ein organisches Polyisocyanat mit blockierten Isocyanatgruppen hinzufügt.

Gegenstand der Erfindung ist auch die Verwendung der erfindungsgemäßen wäßrigen Lösungen oder Dispersionen zur Herstellung von Überzügen auf hitzeresistenten Substraten, dadurch gekennzeichnet, daß man die, gegebenenfalls Hilfs- und Zusatzmittel der Lacktechnologie enthaltenden wäßrigen Lösungen oder Dispersionen auf die Substrate aufbringt und die so erhaltenen Überzüge durch Erhitzen auf bis zu 160°C unter Verdunsten des Wassers und der gegebenenfalls vorliegenden Lösungsmittel und unter Hitzevernetzung des Bindemittels aushärtet.

Die beim erfindungsgemäßen Verfahren einzusetzenden Verbindungen der Formel

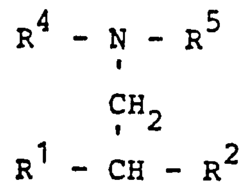

stellen Michael-Addukte von sekundären Aminen der Formel

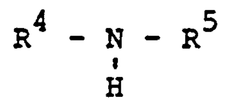

an Verbindungen der Formel

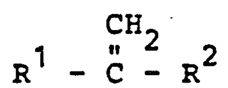

die formal als Derivate der Acrylsäure bzw. von substituierten Acrylsäuren angesehen werden können, dar.

Bei den sekundären Aminen der vorstehend genannten allgemeinen Formel handelt es sich um solche, für welche $R^4$ und $R^5$ die bereits obengenannte Bedeutung haben, vorzugsweise jedoch um solche, für welche $R^4$ und $R^5$ für gleiche oder verschiedene Reste stehen und Alkylgruppen mit 1 bis 18 Kohlenstoffatomen, vorzugsweise 1 bis 4 Kohlenstoffatomen oder Hydroxyalkylreste mit 2 bis 4 Kohlenstoffatomen mit gegebenenfalls mehreren Hydroxylsubstituenten stehen, mit der Maßgabe, daß mindestens einer der Reste $R^4$ oder $R^5$ einen Hydroxyalkylrest darstellt. Beispiele geeigneter sekundärer Amine, die dieser Definition entsprechen, sind Methyl-2-hydroxy-ethylamin, Methyl-2-hydroxypropylamin, Methyl-3-hydroxypropylamin, Ethyl-, Butyl-, Octyl- und Stearyl-ω-hydroxyalkylamine, Bis-(2-hydroxyethyl)amin, Bis-[2-hydroxypropyl]amin, Bis[3-hydroxypropyl]amin oder 2-(Methyl-, Ethyl-, Butyl-,Oleyl- oder Stearyl-amino)-2-methylpropandiol-1,3.

Geeignete ungesättigte Verbindungen der zuletztgenannten Formel sind beliebige Verbindungen, für welche $R^1$ und $R^2$ die obengenannte Bedeutung haben, vorzugsweise jedoch solche der genannten allgemeinen Formel, in welcher $R^1$ für Wasserstoff oder eine Methylgruppe steht, und $R^2$ die bereits obengenannte Bedeutung hat, mit der Maßgabe, daß $R^3$ für einen Alkylrest mit 1 bis 4 Kohlenstoffatomen steht. Besonders bevorzugt sind solche Verbindungen der zuletztgenannten allgemeinen Formel, in welcher $R^1$ für Wasserstoff oder eine Methylgruppe und $R^2$ für ein Nitrilgruppe oder eine gegebenenfalls substituierte Säureamidgruppe stehen.

Zu den besonders bevorzugten Derivaten der Acrylsäure bzw. von substituierten Acrylsäuren gehören somit Acrylnitril, Methacrylnitril, Acrylsäureamid, Methacrylsäureamid, N-Methyl-acrylsäureamid, N-Methacrylsäureamid, N-Butyl-acrylsäureamid, N,N-Dimethyl-acrylsäureamid oder N,N-Dimethyl-methacrylsäureamid. Die Ester der genannten Säuren wie z.B. Acrylsäure-methylester, -ethylester, -butylester oder -stearylester, sowie die entsprechenden Alkacrylsäureester sind zwar ebenfalls geeignet, jedoch weniger bevorzugt, da ihre Umsetzung mit den sekundären Aminen zu den entsprechenden erfindungsgemäßen Ausgangsmaterialien weniger glatt verläuft als im Falle der genannten bevorzugten Ausgangsmaterialien. So müßten vergleichsweise höhere Temperaturen, stark alkalische Katalysatoren und überschüssige Mengen der ungesättigten Verbindungen eingesetzt werden, welche anschließend durch Destillation wieder entfernt werden müssen.

Die Herstellung der erfindungswesentlichen Ausgangsverbindungen der Formel

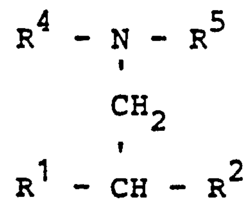

aus den genannten Grundsubstanzen erfolgt in an sich bekannter Weise (vgl. z.B.Chem. Pharm. Bull. (Tokyo) 9, (1961), Seiten 996-999 oder DE-OS 2 519 008). In der Regel genügt es, die beiden Reaktionspartner bei Raumtemperatur in stöchiometrischen Mengen miteinander zu vermischen und die auftretende exotherme Reaktion gegebenenfalls durch Kühlung unter Kontrolle zu halten.

Die so erhaltenen erfindungswesentlichen Ausgangsmaterialien der zuletztgenannten allgemeinen Formel entsprechen bezüglich der Bedeutung der Reste $R^1$, $R^2$, $R^4$ und $R^5$ den oben gemachten Ausführungen.

Reaktionspartner für die Hydroxylgruppen aufweisenden tert. Amine der zuletztgenannten allgemeinen Formel sind beliebige organische Polyisocyanate mit gegebenenfalls teilweise blockierten Isocyanatgruppen.

Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$Q(NCO)_n$

in der

$n = 2 - 4$, vorzugsweise 2,

und

Q einen aliphatischen Kohlenwasserstoffrest mit 2 - 18, vorzugsweise 6 - 10 C-Atomen,
einen cycloaliphatischen Kohlenwasserstoffrest mit 4 - 15, vorzugsweise 5 - 10 C-Atomen,
einen aromatischen Kohlenwasserstoffrest mit 6 - 15, vorzugsweise 6 - 13 C-Atomen,
oder einen araliphatischen Kohlenwasserstoffrest mit 8-15, vorzugsweise 8 - 13 C-Atomen,

bedeuten, z.B. Ethylen-diisocyanat, 1,4-Tetramethylen-diisocyanat, 1,6-Hexamethylendiisocyanat, 1,12-Dodecan-diisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-iso-cyanatomethyl-cyclohexan (Isophorondiisocyanat), Per-hydro-2,4'- und/oder -4,4'-diphenyl-methan-diisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenylpolymethylen-polyisocyanate, wie sie durch Anilin-Formaldehyd-Kondensation und anschließende Phosgenierung erhalten und z.B. in den GB-Patentschriften 874 430 und 848 671 beschrieben werden, Carbodiimidgruppen aufweisende Polyisocyanate, wie sie in der DE-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden oder Biuretgruppen aufweisende Polyisocyanate, wie sie z.B. in den US-Patentschriften 3 124 605, 3 201 372 und 3 124 605 sowie in der GB-Patentschrift 889 050 beschrieben werden. Es ist auch möglich, beliebige Mischungen der vorgenannten Polyisocyanate zu verwenden.

Besonders bevorzugt werden jedoch als organische Polyisocyanate Polyisocyanatprepolymere eingesetzt, wie sie in an sich bekannter Weise durch Umsetzung von einfachen Polyisocyanaten mit unterschüssigen Mengen an Verbindungen mit gegenüber Isocyanatgruppen reaktionsfähigen Gruppen, vorzugsweise Hydroxylgruppen, erhalten werden. Zur Herstellung dieser NCO-Prepolymeren werden vorzugsweise die technisch leicht zugänglichen Polyisocyanate, insbesondere Diisocyanate, eingesetzt. Beispiele hierfür sind 2,4- und 2,6-Toluylendiisocyanat, sowie deren technische Gemische, Diphenylmethan-2,4'- und -4,4'-Diisocyanat, sowie deren technische Gemische, Isophorondiisocyanat oder Perhydro-4,4'-diphenylmethandiisocyanat.

Reaktionspartner für diese Diisocyanate bei der Herstellung der NCO-Prepolymeren sind beliebige organische Verbindungen, welche mindestens zwei gegenüber Isocyanatgruppen reaktionsfähige Wasserstoffatome aufweisen, und die ansonsten im Sinne der Isocyanat-Additionsreaktion inert sind. Vorzugsweise werden Polyhydroxylverbindungen, insbesondere solche, die 2 bis 8, vorzugsweise 2 bis 3 alkoholische Hydroxylgruppen aufweisen, eingesetzt. Diese Verbindungen weisen ein Molekulargewicht von 62 bis 10 000, vorzugsweise 500 bis 6000 auf.

Geeignete Polyhydroxylverbindungen sind beispielsweise

a) einfache, gegebenenfalls Ethergruppen aufweisende, mehrwertige Alkohole des Molekulargewichtsbereichs 62 bis 400 wie z.B. Ethylenglykol, Propylenglykol, 1,2- und 1,4-Dihydroxybutan, 1,6-Dihydroxyhexan, Diethylenglykol, Triethylenglykol, Dipropylenglykol, Tripropylenglykol, Tetrapropylenglykol, Trimethylolpropan oder Glycerin;

b) höhermolekulare Polyesterpolyole des Molekulargewichtsbereichs 400 bis 10 000, vorzugsweise 500 bis 6000 auf Basis der genannten einfachen Alkohole und mehrwertigen Carbonsäuren bzw. Anhydriden derartiger Säuren wie z.B. Adipinsäure, Phthalsäure, Tetrahydrophthalsäure, Hexahydrophthalsäure oder den entsprechenden Säureanhydriden;

c) höhermolekulare Polyetherpolyole des Molekulargewichtsbereichs 400 bis 10.000, vorzugsweise 500 bis 6.000 wie z.B. die Alkoxylierungsprodukte der unter a) genannten einfachen mehrwertigen Alkohole oder von anderen geeigneten Startermolekülen wie z.B. von Bisphenolen wie Bisphenol A, die unter Verwendung von Ethylenoxid und/oder Propylenoxid als Alkoxylierungsmittel hergestellt werden, und bei deren Herstellung gegebenenfalls auch Gemische verschiedener Startermoleküle eingesetzt werden können.

Bei der Herstellung der NCO-Prepolymeren können selbstverständlich beliebige Gemische der unter a) bis c) beispielhaft genannten Verbindungen verwendet werden. Neben diesen beispielhaft genannten Verbindungen können auch die aus der Polyurethanchemie an sich bekannten Polythioether, Polyacetale, Polycarbonate oder Polyesteramide zur Herstellung der NCO-Prepolymeren verwendet werden.

Gewünschtenfalls können in die NCO-Prepolymeren zusätzlich hydrophile Aufbaukomponenten eingebaut werden. Dies kann beispielsweise durch Mitverwendung von Verbindungen erfolgen, die (i) mindestens eine gegenüber Isocyanatgruppen reaktionsfähige Gruppe, vorzugsweise alkoholische Hydroxylgruppe, und (ii) nichtionisch-hydrophile Polyoxyethyleneinheiten aufweisen. Derartige Aufbaukomponenten sind beispielsweise in US-PS 3 905 929, US-PS 4 190 566 oder US-PS 4 237 264 beschrieben. Ebenso ist es selbstverständlich möglich, neben den obengenannten Polyisocyanaten, die nicht hydrophil modifiziert sind, als weitere Polyisocyanatkomponente hydrophil modifizierte Polyisocyanate zu verwenden, beispielsweise solche der in US-PS 3 920 598 beschriebenen Art oder solche, wie sie durch Umsetzung von überschüssigen Mengen an organischen Polyisocyanaten der oben beispielhaft genannten Art mit hydrophilen Aufbaukomponenten mit gegenüber Isocyanatgruppen reaktionsfähigen Gruppen der zuletzt genannten Art erhalten werden können.

Bei der Herstellung der NCO-Prepolymeren werden die genannten Ausgangsmaterialien im allgemeinen unter Einhaltung eines Äquivalentverhältnisses von Isocyanatgruppen zu gegenüber Isocyanatgruppen reaktionsfähigen Gruppen von 1,2:1 bis 5:1 vorzugsweise 1,5:1 bis 3:1 bei Temperaturen von 20 bis 150°C, vorzugsweise 60 bis 120°C miteinander zur Reaktion gebracht. Aus den genannten Angaben bezüglich des Äquivalentverhältnisses der Reaktionspartner geht bereits hervor, daß unter "NCO-Prepolymeren" im Rahmen der vorliegenden Erfindung auch sogenannte "Semiprepolymere", d.h. Gemische echter Prepolymerer mit überschüssigen Mengen an Ausgangsisocyanaten, zu verstehen sind.

Bei der Durchführung des erfindungsgemäßen Verfahrens gelangt die Polyisocyanatkomponente gegebenenfalls in teilblockierter Form zum Einsatz. Geeignete Blockierungsmittel sind beispielsweise Lactame, wie ε-Caprolactam, Oxime wie Acetonoxim, Methylethylketonoxim (Butanonoxim) und Cyclohexanonoxim, C-H-acide Verbindungen wie Malonsäurediethylester, Acetessigsäureethylester und Acetylaceton, Alkohole wie die einfachen Monoalkohole mit 1 bis 4 C-Atomen, 2-Ethylhexanol, Ethylenglykolmonoethylether und Diethylenglykolmonoethylether, Phenole wie Phenol, Kresol und Xylenol und heterocyclische Verbindungen, wie Triazole, Imidazoline, Imidazole und Tetrahydropyrimidine. Die beschriebenen Blockierungsmittel können allein oder in Form von Gemischen eingesetzt werden. Bevorzugte Blockierungsmittel sind ε-Caprolactam, Butanonoxim und Malonsäurediethylester.

Die Teilblockierung der beim erfindungsgemäßen Verfahren zum Einsatz gelangenden Polyisocyanatkomponente kann ebenso wie die Bildung der NCO-Prepolymeren in An- oder Abwesenheit von Lösungsmitteln z.B. Aceton, Methylethylketon, Essigsäureethylester, Essigsäurebutylester, Toluol, Xylol und/oder aliphatischen Kohlenwasserstofflösungsmitteln erfolgen. Die Blockierungsreaktion wird im allgemeinen bei Temperaturen bis zu 150°C, vorzugsweise bei 60 - 120°C durchgeführt. Im Falle der Verwendung von teilblockierten NCO-Prepolymeren als Polyisocyanatkomponente erfolgt die Teilblockierung im allgemeinen gleichzeitig oder im Anschluß an die Herstellung der NCO-Prepolymeren.

Die beim erfindungsgemäßen Verfahren zum Einsatz gelangende Polyisocyanatkomponente weist im allgemeinen einen Gesamtgehalt an freien und blockierten Isocyanatgruppen (berechnet als NCO, Molekulargewicht = 42, bezogen auf das Gesamtgewicht der Polyisocyanatkomponente inklusive dem Blockierungsmittel) von 1 bis 25, vorzugsweise 2 bis 15 Gew.-% und einen Gehalt an freien Isocyanatgruppen, bezogen auf das Gesamtgewicht der Polyisocyanate, inklusive dem gegebenenfalls vorliegenden Blockierungsmittel, von 1 bis 20, vorzugsweise 1 bis 12 Gew.-% auf. Die NCO-Funktionalität der gegebenenfalls teilweise blockierten Polyisocyanate, d.h. die Anzahl an freien Isocyanatgruppen, die im statistischen Mittel pro Molekül im gegebenenfalls teilblockierten Polyisocyanat vorliegen, liegt im allgemeinen bei 0,3 bis 3. Im Falle der Verwendung von erfindungswesentlichen tert.-Aminen, die zwei oder mehr Hydroxylgruppen aufweisen, liegt die NCO-Funktionalität vorzugsweise unter 2, beispielsweise bei 0,5 bis 1,8, um den Aufbau von hochmolekularen Polyurethanen zu erschweren. Im bevorzugten Falle der Verwendung von NCO-Prepolymeren kann diese NCO-Funktionalität sowohl durch Art (Funktionalität) der Ausgangspolyisocyanate und Polyhydroxylverbindungen als auch durch deren Mengenverhältnisse und auch durch geeignete Wahl der

Menge des Blockierungsmittels eingestellt werden. In den teilblockierten Polyisocyanaten liegen im allgemeinen pro freier Isocyanatgruppe 0,2 bis 3 Blockierte Isocyanatgruppen vor.

Die 1. Stufe des erfindungsgemäßen Verfahrens, d.h. die Umsetzung der gegebenenfalls teilblockierten Polyisocyanate mit den Hydroxylgruppen aufweisenden tert. Aminen der Formel

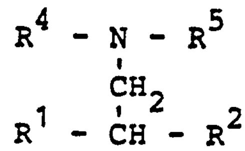

kann sowohl in Substanz als auch in Gegenwart geeigneter Lösungsmittel wie z.B. solchen der zuletzt beispielhaft genannten Art bei 20 bis 120, vorzugsweise 60 bis 100°C erfolgen. Die Mengenverhältnisse der Reaktionspartner entsprechen hierbei im allgemeinen einem NCO/OH-Äquivalentverhältnis von 0,7:1 bis 2,5:1, vorzugsweise 0,9:1 bis 1,5:1, insbesondere 1:1 bis 1,2:1, bezogen auf die freien Isocyanatgruppen der Polyisocyanatkomponente und die Hydroxylgruppen der erfindungswesentlichen tert. Amine. Gegebenenfalls in den so erhaltenen Zwischenprodukten noch vorliegende, freie Isocyanatgruppen reagieren beim nachfolgenden Lösungs- bzw. Dispergierschritt mit dem Wasser unter Kettenverlängerung ab. Ein unter 1:1 liegendes Äquivalentverhältnis kommt hierbei im allgemeinen nur in Betracht, wenn erfindungswesentliche tert. Amine eingesetzt werden, die mindestens 2 Hydroxylgruppen aufweisen. Ein oberhalb 1,2:1 und insbesondere oberhalb 1,5:1 liegendes Äquivalentverhältnis kommt dann in Betracht, wenn eine Kettenverlängerungsreaktion mit dem Wasser oder, wie nachstehend beschrieben, mit zusätzlich mitverwendeten Kettenverlängerungsmitteln erwünscht ist.

Im übrigen werden bei der Durchführung des erfindungsgemäßen Verfahrens Art und Mengenverhältnisse der Reaktionspartner vorzugsweise so gewählt, daß in den als Zwischenprodukten entstehenden Oligourethanen mit tert. Aminogruppen für jede tert. Aminogruppe 1 bis 1,5, vorzugsweise 1 bis 1,2 blockierte Isocyanatgruppen entfallen.

In der 2. Stufe des erfindungsgemäßen Verfahrens erfolgt eine zumindest teilweise Überführung der tert. Aminstickstoffatome in quaternäre oder vorzugsweise ternäre Ammoniumgruppen. Dies kann durch Quaternierung mit Alkylierungsmitteln wie Methyljodid oder Dimethylsulfat, mit Cycloalkylierungsmitteln wie Cyclohexyljodid oder mit Aralkylierungsmitteln wie Benzylbromid in an sich bekannter Weise bei Temperaturen von 20 bis 100°C, vorzugsweise in Lösung in inerten Lösungsmitteln der oben beispielhaft genannten Art oder aber vorzugsweise durch Zugabe einer, die tert. Aminogruppen neutralisierenden Säure geschehen.

Geeignete Säuren sind beispielsweise beliebige anorganische oder organische Säuren, die einen unterhalb 5 liegenden pKa-Wert aufweisen wie Salzsäure, Salpetersäure, phosphorige Säure, Phosphorsäure, Amidosulfonsäure, Ameisensäure, Essigsäure, Glykolsäure, Milchsäure oder Chloressigsäure. Vorzugsweise werden organische Säuren verwendet, die mit den tert. Aminogruppen aufweisenden Zwischenprodukten bzw. ihren Lösungen in den beispielhaft genannten Lösungsmitteln verträglich sind.

Gemäß einer besonders bevorzugten Variante wird die 2. Stufe des erfindungsgemäßen Verfahrens unter Verwendung von äquivalenten Mengen einer Säure der beispielhaft genannten Art durchgeführt. Die Verwendung eines Säureüberschusses sollte jedoch vermieden werden, da kationische wäßrige Systeme oftmals in Anwesenheit von Fremdelektrolyten zu Ausfällungen neigen.

Die Verwendung eines Säureunterschusses, bezogen auf die tert. Aminogruppen des Zwischenprodukts, ist prinzipiell denkbar. Wesentlich ist einzig und allein, daß der Neutralisationsgrad so bemessen wird, daß wasserlösliche bzw. -dispergierbare Umsetzungsprodukte erhalten werden.

Im Falle der weniger bevorzugten Quaternierung der tert. Aminostickstoffatome wird nur ein Teil der vorliegenden tert. Aminogruppen quaterniert, so daß in den Oligourethanen noch tert. Aminogruppen vorliegen, die thermisch in sekundäre Aminogruppen zurückgespalten werden können. Die Menge des Quaternierungsmittels wird daher so gewählt, daß einerseits in den Verfahrensprodukten eine zu ihrer Löslichkeit bzw. Dispergierbarkeit ausreichende Menge an quaternären Stickstoffatomen und andererseits eine zur Vernetzung der Verfahrensprodukte ausreichende Menge an "verkappten sekundären Aminogruppen", d.h. an tert. Aminogruppen vorliegt.

Die Überführung der Salzgruppen enthaltenden Oligourethane in wäßrige Lösungen oder Dispersionen erfolgt durch einfaches Vermischen der Oligourethane bzw. ihrer Lösungen mit Wasser. Im Falle der Verwendung von hochsiedenden Lösern verbleiben diese in der wäßrigen Lösung oder Dispersion und wirken dort oft als Koaleszenzhilfsmittel. Niedrigsiedende Lösungsmittel wie z.B. Aceton können aus den wäßrigen Systemen im Anschluß an deren Herstellung im Vakuum entfernt werden. Ein Arbeiten ohne Lösungsmittel ist insbesondere im Falle von niedermolekularen, niedrigviskosen Oligourethanen möglich. Die Viskosität der in

Wasser zu lösenden oder zu dispergierenden Oligourethane kann gewünschtenfalls durch gelindes Erwärmen erniedrigt werden. Gegebenenfalls können zum homogenen Vermischen mit Wasser auch mechanische Spezialgeräte eingesetzt werden, die in der Lage sind, Zonen hoher Schergefälle zu erzeugen.

Die so erhaltenen erfindungsgemäßen Systeme stellen, in Abhängigkeit vom Ionengruppengehalt und vom Molekulargewicht der Oligourethane molekulardisperse bzw. kolloidale Lösungen oder Dispersionen dar, deren Festkörper als diskontinuerliche Phase vorliegt. Die Teilchengröße der in solchen Dispersionen vorliegenden Festkörper liegt im allgemeinen unter 0,001, vorzugsweise unter 0,0002 mm. Die Menge des zur Lösung bzw. Dispergierung eingesetzten Wassers und die Menge des gegebenenfalls in den Lösungen oder Dispersionen verbleibenden Lösungsmittels wird im übrigen vorzugsweise so bemessen, daß 65-15 gew.-%ige Lösungen oder Dispersionen erhalten werden. Die Menge des gegebenenfalls in den Lösungen oder Dispersionen noch vorliegenden Lösungsmittels beträgt im allgemeinen maximal 75 Gew.-%, bezogen auf die Menge des in den Lösungen oder Dispersionen vorliegenden Wassers.

Gemäß einer weiteren, weniger bevorzugten Ausführungsform der Herstellung der in den erfindungsgemäßen Lösungen oder Dispersionen vorliegenden Oligourethane werden die gegebenenfalls teilblockierten Ausgangspolyisocyanate mit den Hydroxylgruppen aufweisenden tert. Aminen unter Einhaltung eines Äquivalentverältnisses von freien Isocyanatgruppen zu Hydroxylgruppen von 1,1:1 bis 5:1, vorzugsweise 1,2:1 bis 3:1 zur Reaktion gebracht, so daß Oligourethane entstehen, die noch erhebliche Mengen an freien Isocyanatgruppen aufweisen, und die durch Umsetzung dieser freien Isocyanatgruppen mit Kettenverlängerungsmitteln zu höhermolekularen erfindungsgemäßen Oligourethanen kettenverlängert werden können. Geeignete Kettenverlängerungsmittel sind hierbei beispielsweise die oben unter a) genannten einfachen mehrwertigen Alkohole oder Diamine des Molekulargewichtsbereichs 60-400 wie z.B. Ethylendiamin, Hexamethylendiamin, Isophorondiamin, 4,4'-Di-amino-dicyclohexylmethan, 2,4- und/oder 2,6-Diamino-toluol oder 4,4'-Diaminodiphenylmethan. Auch Hydrazin bzw. Hydrazinderivate wie z.B. Hydrazinhydrat, Oxalsäuredihydrazid oder Adipinsäuredihydrazid kämen als denkbare Kettenverlängerungsmittel in Betracht. Die Kettenverlängerungsreaktion der Isocyanatgruppen aufweisenden Oligourethane erfolgt vorzugsweise in Lösung in einem der oben beispielhaft genannten Lösungsmittel bei 50 bis 100°C unter Einhaltung eines Äquivalentverhältnisses von freien Isocyanatgruppen zu gegenüber Isocyanatgruppen reaktionsfähigen Gruppen von 0,8:1 bis 1,2:1. Im Anschluß an die Kettenverlängerungsreaktion erfolgt dann die zumindest teilweise Überführung der vorliegenden tert. Aminogruppen in ternäre bzw. quaternäre Ammoniumgruppen und die Herstellung der wäßrigen Lösungen oder Dispersionen entsprechend den oben gemachten Ausführungen.

Gemäß einer Variante dieser Ausführungsform der Herstellung der erfindungsgemäßen Lösungen oder Dispersionen erfolgt die Kettenverlängerungsreaktion der Isocyanatgruppen aufweisenden Oligourethane unter Verwendung von blockierten Kettenverlängerungsmitteln der beispielsweise in DE-OS 2 725 589, DE-OS 2 732 131 und insbesondere DE-OS 2 811 148 beschriebenen Art. Dies bedeutet, daß die Isocyanatgruppen aufweisenden Oligourethane beispielsweise mit Ketiminen, Oxazolidinen oder insbesondere Ketazinen der in genannten Veröffentlichungen beschriebenen Art in Abwesenheit von Wasser vermischt werden, worauf sich die Durchmischung der so erhaltenen Gemische mit Wasser anschließt. Hierbei entstehen aus den genannten verkappten Kettenverlängerungsmitteln unter dem hydrolytischen Einfluß des Wassers zumindest formal intermediär die den Ketiminen, Oxazolidinen oder Ketazinen zugrunde liegenden Polyamine, Aminoalkohole oder Hydrazin, die mit den freien Isocyanatgruppen unter Kettenverlängerungsreaktion abreagieren. Auch gemäß dieser Variante wird die Menge der blockierten Kettenverlängerungsmittel vorzugsweise so bemessen, daß für jede freie Isocyanatgruppe der Isocyanatgruppen aufweisenden Oligourethane ca. 0,8 bis 1,2 potentielle, gegenüber Isocyanatgruppen reaktionsfähige Gruppen zur Verfügung stehen. Selbstverständlich können auch nur teilblockierte potentielle Kettenverlängerungsmittel der genannten Art eingesetzt werden, d.h. beispielsweise Verbindungen, die höchstens eine aminische oder hydrazinische Aminogruppe und mindestens eine blockierte aminische oder hydrazinische Aminogruppe der genannten Art aufweisen.

Bei dieser Variante der Herstellung der erfindungsgemäßen Lösungen oder Dispersionen kann die teilweise Überführung der tert. Aminogruppen in ternäre Ammoniumgruppen auch gleichzeitig mit der Durchmischung der Isocyanatgruppen aufweisenden Oligourethane mit den blockierten Kettenverlängerungsmitteln erfolgen, indem man die Isocyanatgruppen aufweisenden Oligourethane gleichzeitig mit blockierten Kettenverlängerungsmitteln der genannten Art und mit einer Säure wie beispielsweise Essigsäure vermischt. Durch Vermischen derartiger Systeme mit Wasser erfolgt dann die Kettenverlängerungsreaktion der Oligourethane und die Bildung der Lösungen bzw. der Dispersionen der kettenverlängerten Reaktionsprodukte in einem Einstufenverfahren.

Gemäß einer weiteren, ebenfalls weniger bevorzugten Ausführungsform der Herstellung der erfindungsgemäßen Lösungen oder Dispersionen werden die Hydroxylgruppen aufweisenden tert. Amine mit überschüssigen Mengen an nicht blockierten Polyisocyanaten, beispielsweise unter Einhaltung eines NCO/OH-Äquivalentverhältnisses von 1,2:1 bis 5:1, vorzugsweise 1,5:1 bis 3:1, zur Reaktion gebracht, so daß freie Isocyanatgruppen aufweisende Umsetzungsprodukte erhalten werden, deren Isocyanatgruppen im Anschluß an die Herstellung der genannten Umsetzungsprodukte mit Blockierungsmitteln der oben beispielhaft genannten Art blockiert werden. Die so erhaltenen blockierten Isocyanatgruppen und tert. Aminogruppen aufweisenden Zwischenprodukte werden dann wie oben beschrieben in die erfindungsgemäßen Lösungen oder Dispersionen überführt.

Vorzugsweise erfolgt die Herstellung der erfindungsgemäßen Lösungen oder Dispersionen nach einer der

beschriebenen Varianten unter Verwendung von teilblockierten organischen Polyisocyanaten der beispielhaft genannten Art, so daß die letztendlich in Wasser gelöst oder dispergiert vorliegenden Oligourethane einen zur Selbstvernetzung unter Hitzeeinwirkung ausreichenden Gehalt an blockierten Isocyanatgruppen aufweisen. Gemäß einer weniger bevorzugten Variante des erfindungsgemäßen Verfahrens können jedoch auch bei der Herstellung der Oligourethane unblockierte organische Polyisocyanate der beispielhaft genannten Art verwendet werden, so daß Oligourethane entstehen, die keine blockierten Isocyanatgruppen aufweisen. In diesem Falle werden den Systemen übliche Polyisocyanate mit blockierten Isocyanatgruppen zugesetzt, um die Vernetzbarkeit der wäßrigen Bindemittel zu gewährleisten.

Geeignete organische Polyisocyanate mit blockierten Isocyanatgruppen können beispielsweise durch eine vollständige Blockierung der Isocyanatgruppen der oben beispielhaft genannten Polyisocyanate mit den oben ebenfalls beispielhaft genannten Blockierungsmitteln erhalten werden. Gut geeignet als zusätzlich einzusetzende Polyisocyanate mit blockierten Isocyanatgruppen sind insbesondere ε-Caprolactam-, Cyclohexanonoxim-, Malonsäurediethylester- oder Acetessigsäureethylester-blockierte Polyisocyanate wie z.B. dergestalt blockiertes Tris-(isocyanatohexyl)-biuret, welches auch im Gemisch mit seinen höheren Homologen vorliegen kann, Tris-(isocyanatohexyl)-isocyanurat, welches auch im Gemisch mit seinen höheren Homologen vorliegen kann, oder das dergestalt blockierte Umsetzungsprodukt von 3 Mol 2,4- und gegebenenfalls 2,6-Diisocyanatotoluol mit 1 Mol Trimethylolpropan.

Bei dieser weniger bevorzugten Variante werden die blockierten Polyisocyanate dem System zu einem beliebigen Zeitpunkt während der Herstellung der Lösungen- bzw. Dispersionen zugesetzt. Besonders vorteilhaft ist der Zusatz der blockierten Polyisocyanate zu den tert. Aminstickstoffatome aufweisenden Oligourethanen vor der Überführung der tert. Aminstickstoffatome in quaternäre oder ternäre Ammoniumgruppen.

Gemäß allen Ausführungsformen der Herstellung der erfindungsgemäßen Lösungen oder Dispersionen weisen die gelösten oder dispergierten Oligourethane

a) einen Gehalt an ternären oder quaternären Ammoniumgruppen (berechnet als Stickstoff, Atomgewicht = 14) von 0,1 bis 3, vorzugsweise 0,3 bis 2 Gew.-%,

b) einen Gehalt an tert. Aminstickstoffatomen (berechnet als Stickstoff, Atomgewicht = 14) von 0 bis 2,8, vorzugsweise 0 bis 1,8 Gew.-% und

c) einen Gehalt an blockierten Isocyanatgruppen (berechnet als NCO, Molekulargewicht = 42) von 0 bis 15, vorzugsweise 0,5 bis 15 und insbesondere 1 bis 10 Gew.-% auf.

Vorzugsweise werden die Art und Mengenverhältnisse der Ausgangsmaterialien bei der Herstellung der Oligourethane im übrigen so gewählt, daß der Gehalt der Oligourethane an ternären Ammoniumgruppen a), an tert. Aminogruppen b) und an blockierten Isocyanatgruppen c) einem Äquivalentverhältnis von (a+b):c von 1:1 bis 1:1,5 entspricht. Im Falle des weniger bevorzugten Vorliegens von quaternären Ammoniumgruppen in den Oligourethanen müssen noch tert. Aminogruppen und/oder ternäre Ammoniumgruppen vorliegen, so daß die Oligourethane thermisch vernetzbar bleiben. Diese thermische Vernetzbarkeit ist im allgemeinen beim gleichzeitigen Vorliegen von blockierten Isocyanatgruppen einerseits und tert. Stickstoffatomen und/oder ternären Ammoniumgruppen andererseits im Äquivalentverhältnis von NCO:N = 1:1 bis 1,5:1, vorzugsweise 1:1 bis 1,2:1 gegeben. Falls bei der Herstellung der Oligourethane organische Polyisocyanate mit ausschließlich freien Isocyanatgruppen eingesetzt werden, wird die Menge der zugesetzten Polyisocyanate mit vollständig blockierten Isocyanatgruppen so bemessen, daß in den wäßrigen Lösungen oder Dispersionen der Gehalt an ternären Ammoniumgruppen a), an tert. Aminogruppen b) und an blockierten Isocyanatgruppen c), jetzt bezogen auf die blockierten Isocyanatgruppen der zugesetzten blockierten Polyisocyanate, ebenfalls bei einem Äquivalentverhältnis von (a + b):c von 1:1 bis 1:1,5 liegt. Selbstverständlich ist es auch möglich, diesen zur einwandfreien Hitzevernetzbarkeit erforderlichen Gehalt an blockierten Isocyanatgruppen in den erfindungsgemäßen Lösungen oder Dispersionen dadurch sicherzustellen, daß man einen Teil der blockierten Isocyanatgruppen in das Oligourethan einbaut und einen weiteren Teil durch Zusatz einer entsprechenden Menge an blockierten Polyisocyanaten einführt.

Die unter a) und b) genannten Ammoniumgruppen bzw. Aminostickstoffatome sind bei Verwendung von erfindungswesentlichen tert. Aminen mit nur einer Hydroxylgruppe endständig, bei Verwendung von entsprechenden mehrwertigen Alkoholen innerhalb des Moleküls eingebaut. Der Begriff "Oligourethane" umfaßt, den obengemachten Ausführungen bezüglich des NCO/OH-Äquivalentverhältnisses und der Funktionalität der Ausgangsmaterialien entsprechend, niedermolekulare Oligourethane als auch höhermolekularer "Oligourethane", die besser als "Polyurethane" bezeichnet würden, und die dann erhalten werden, wenn mindestens difunktionelle Polyisocyanate mit mindestens difunktionellen tert. Aminen und gegebenenfalls mindestens difunktionelle Kettenverlängerungsmitteln unter Verwendung von nahezu äquivalenten Mengen der Ausgangsmaterialien umgesetzt werden. Dies ist jedoch weniger bevorzugt.

Besonders bevorzugte erfindungsgemäße Lösungen oder Dispersionen sind solche, deren Oligourethane

a) einen Gehalt an ternären Ammoniumgruppen von 0,5 bis 1,5 Gew.-%,

b) einen Gehalt an tert. Aminstickstoffatomen von 0 bis 1,3 Gew.-% und

c) einen Gehalt an blockierten Isocyanatgruppen von 1,5 bis 8 Gew.-% aufweisen,

mit der Maßgabe, daß das Äquivalentverhältnis der blokkierten Isocyanatgruppen zu den ternären Ammoniumgruppen und den tert. Aminogruppen bei 1:1 bis 1,5:1, vorzugsweise 1:1 bis 1,2:1 liegt.

Die erfindungsgemäßen Lösungen oder Dispersionen können, gegebenenfalls nach Zusatz von in der Lacktechnologie üblichen Hilfs- und Zusatzmitteln wie z.B. Pigmenten, Füllstoffen, Verlaufshilfsmitteln

und/oder Mattierungsmitteln, als Beschichtungsmittel für beliebige hitzeresistente Substrate Verwendung finden. Der Auftrag dieser Beschichtungsmittel auf die zu beschichtenden Substrate erfolgt nach den an sich bekannten Methoden der Lacktechnologie, beispielsweise durch Spritzen, Walzen, Tauchen oder Rakeln. Nach dem Verdunsten des Wassers bzw. Wasser-Lösungsmittel-Gemischs liegen Filme vor, die in der Regel noch weich, teilweise sogar klebrig sind. Durch 30-minütiges Erhitzen auf 90 - 160°C, vorzugsweise 110 - 130°C, werden jedoch feste, klebfreie Filme erhalten, die auch dem Angriff polarer Lösungsmittel standhalten. Hieraus folgt, daß bei der Herstellung der erfindungsgemäßen Oligourethane Reaktionstemperaturen oberhalb 90°C und insbesondere von oberhalb 100°C nur kurzfristig erreicht werden dürfen, um eine vorzeitige Vernetzungsreaktion auszuschließen.

Gemäß einer besonders bevorzugten Ausführungsform der eerfindungsgemäßen Verwendung erfolgt die Applikation der genannten Beschichtungsmittel auf dem Wege der kathodischen Tauchlackierung von elektrisch leitenden, vorzugsweise metallischen Substraten. Hierbei wird vorzugsweise so verfahren, daß in dem wäßrigen Tauchbad, das einen Festkörpergehalt von ca. 8 - 20 Gew.-% aufweist, zwei Elektroden angeordnet werden, von denen eine (Kathode) das zu beschichtende Substrat darstellt. Im Falle der Verwendung eines Metallgefäßes kann dieses als zweite Elektrode (Anode) verwendet werden. Beim Anlegen einer Gleichstromspannung von ca. 100 - 300 V scheidet sich innerhalb eines Zeitraums von ca. 1 bis 3 Sek. ein dicker Harzfilm auf dem Substrat ab, dessen Schichtdicke nach dem Ende der Abscheidung, die von allein zum Stillstand kommt und anschließendem Spülen und Trocknen etwa 0,025 - 0,1 mm beträgt. Wie oben beschrieben, wird der so erhaltene weiche und lösungsmittelempfindliche Film durch kurzzeitiges Erhitzen auf 90 - 160°C, vorzugsweise 110 - 130°C in einen klebfreien, festen und lösungsmittelbeständigen Lacküberzug überführt.

Da bei dieser Vernetzungsreaktion die ursprünglich in den Oligourethanen vorliegenden tert. Aminstickstoffatome bzw. ternäre Ammoniumgruppen in neutrale Harnstoffgruppen überführt werden (Reaktion der sekundären Aminogruppen mit Isocyanatgruppen), liegen in den erhaltenen Lackfilmen keine basischen Zentren mehr vor, die eine Hydrolyse von gegebenenfalls vorliegenden Estergruppen unter dem Einfluß von Luftfeuchtigkeit katalysieren könnten. Es ist daher ohne weiteres möglich, in die Lackfilme über die Zwischenstufe der als Bindemittel verwendeten Oligourethane Estergruppen aufweisende Aufbaukomponenten einzubauen (Verwendung von Polyesterpolyolen bei der Herstellung der NCO-Prepolymeren) ohne eine Hydrolyseanfälligkeit der resultierenden Lackfilme befürchten zu müssen.

Gegenüber anderen Elektrotauchlacken des Standes der Technik wie beispielsweise solchen, deren Bindemittel auf Epoxidharzen und blockierten Polyisocyanaten basieren, und bei denen Einbrenntemperaturen von ca. 160-180°C erforderlich sind, zeichnen sich die erfindungsgemäßen Systeme durch eine vergleichsweise niedrige Einbrenntemperatur aus. Es liegt auf der Hand, daß eine Temperaturerniedrigung beim Einbrennprozeß von mindestens 30°C, insbesondere bei der Lackierung von großen Metallteilen wie Autokarosserien eine erhebliche Reduzierung der für das Einbrennen aufzuwendenden Energie bedeutet.

In den nachfolgenden Beispielen beziehen sich alle Angaben in "Teilen" auf Gewichtsteile und alle Prozentangaben auf Gewichtsprozente.

**Beispiel 1**

165 Teile eines Polyethers aus Bisphenol A und Propylenoxid der OH-Zahl 200, 200 Teile eines Polypropylenglykols der OH-Zahl 112 und 90 Teile eines Polyethers aus Trimethylolpropan und Propylenoxid der OH-Zahl 370 werden im Vakuum bei 100°C entwässert und nach dem Abkühlen auf 70°C mit 209 Teilen eines Gemischs aus 2,4- und 2,6-Diisocyanatotoluol (Gewichtsverhältnis = 80:20) vermischt und solange gerührt, bis der NCO-Gehalt auf 4,9 % abgefallen ist. Das so erhaltene, Isocyanatgruppen aufweisende Prepolymer wird mit 34 Teilen ε-Caprolactam versetzt und bei 70°C solange gerührt, bis der NCO-Gehalt 2,7 % beträgt. Mit 300 Teilen Aceton wird nun das teilverblockierte NCO-Vorpolymer verdünnt. In diese Lösung werden dann 40 Teile eines Addukts aus 1 Mol Diethanolamin und 1 Mol Acrylnitril gegeben; die Lösung wird unter Rückfluß solange gerührt, bis sich IR-spektroskopisch nur noch Spuren freier Isocyanatgruppen feststellen lassen. Nach dem Zusatz von 13,2 Teilen Essigsäure werden unter gutem Rühren 1127 Teile Wasser langsam zugegeben. Nach der destillativen Entfernung des Acetons bleibt eine weiße, nicht sehr feinteilige 40 %ige Dispersion des Festkörpers zurück. Das dispergierte Oligourethan weist einen Gehalt an ternären Ammoniumgruppen von 0,41 %, an tert. Aminstickstoffatomen von 0,06 % und an blockierten Isocyanatgruppen (berechnet als NCO) von 1,68 % auf. Das Äquivalentverhältnis der genannten stickstoffhaltigen Gruppen zu den Isocyanatgruppen liegt bei 1:1,2.

Ein Teil dieser Dispersion wird mit Wasser auf einen Festkörpergehalt von 10 % verdünnt und in ein offenes Metallgefäß gegeben, in welches ein gebondertes Stahlblech getaucht wird. Metallgefäß und Stahlblech werden nun so mit einer Gleichstromquelle verbunden, daß das Gefäß mit dem Pluspol und das Blech mit deren Minuspol verbunden wird. Aus der Gleichstromquelle, deren Ausgangsspannung auf 300 V eingestellt wird, wird nun für eine Minute ein Gleichstrom durch das Bad geleitet. Anschließend wird das Stahlblech aus dem Bad entfernt und mit Wasser gespült. Auf beiden Seiten des Bleches hat sich ein weißer, mechanisch nicht belastbarer Film gebildet. Nach 10-minütigem Trocknen bei 60°C wird 30 Minuten bei 130°C eingebrannt. Es resultiert ein klarer, glänzender Film mit guter Härte und einer Dicke von 0,065 mm.

**Beispiel 2**

664 Teile des Isocyanatvorpolymers aus Beispiel 1 werden mit 45 Teilen ε-Caprolactam versetzt und bei 70°C solange gerührt, bis der NCO-Gehalt 2,2 % beträgt. Mit 312 Teilen Aceton wird nun das teilverblockte NCO-Vorpolymer verdünnt. In diese Lösung werden jetzt 58 Teile eines Addukts aus 1 Mol N-Methylethanolamin und 1 Mol Acrylamid gegeben; die Lösung wird unter Rückfluß solange gerührt, bis sich IR-spektroskopisch nur noch Spuren freier Isocyanatgruppen feststellen lassen. Nach dem Zusatz von 13,2 Teilen Essigsäure werden unter gutem Rühren 1449 Teile Wasser langsam zugegeben. Nach der destillativen Entfernung des Acetons bleibt eine weiße, nicht sehr feinteilige Dispersion mit 35,8 % Festkörper zurück. Das dispergierte Oligourethan weist einen Gehalt an ternären Ammoniumgruppen von 0,39 %, an tert. Aminstickstoffatomen von 0,32 % und an blockierten Isocyanatgruppen (berechnet als NCO) von 2,15 % auf. Das Äquivalentverhältnis der genannten stickstoffhaltigen Gruppen zu den Isocyanatgruppen liegt bei 1:1.

Auf ein unbehandeltes Stahlblech wird ein Naßfilm von etwa 0,1 mm Dicke aufgetragen und 1 Stunde bei Raumtemperatur getrocknet. Nach weiterem 10-minütigem Trocknen bei 60°C erhält man einen weichen, klebfreien Überzug, der mit Aceton ablösbar ist. Nach 60-minütigem Einbrennen bei 120°C erhält man einen trockenen, klebfreien und mit Aceton nicht anlösbaren Lacküberzug.

**Beispiel 3**

664 Teile des Isocyanatvorpolymers aus Beispiel 1 werden mit 26 Teilen Butanonoxim versetzt und bei 70°C solange gerührt, bis der NCO-Gehalt 3,05 % beträgt. Mit 297 Teilen Aceton wird nun das teilblockierte NCO-Vorpolymer verdünnt. In diese Lösung werden jetzt 40 Teile eines Addukts aus 1 Mol Diethanolamin und 1 Mol Acrylnitril gegeben; die Lösung wird unter Rückfluß solange gerührt, bis sich IR-spektroskopisch nur noch Spuren freier Isocyanatgruppen feststellen lassen. Nach dem Zusatz von 13,2 Teilen Essigsäure werden unter gutem Rühren 1115 Teile Wasser langsam zugegeben. Nach der destillativen Entfernung des Acetons bleibt eine weiße Dispersion mit 40 % Festkörpergehalt zurück. Das dispergierte Oligourethan weist einen Gehalt an ternären Ammoniumgruppen von 0,41 %, an tert. Aminstickstoffatomen von 0,06 % und an blockierten Isocyanatgruppen (berechnet als NCO) von 1,69 % auf. Das Äquivalentverhältnis der genannten stickstoffhaltigen Gruppen zu den Isocyanatgruppen liegt bei 1:1,2.

Nach der Methode des Beispiels 1 wird auf einem gebondertem Stahlblech ein Film erzeugt und getrocknet. Nach 1-stündigem Erhitzen auf 110°C wird ein trockener, klebfreier Film erhalten, der gegen Aceton beständig ist und eine Dicke von 50 µm besitzt.

**Beispiel 4**

664 Teile des Isocyanatvorpolymers aus Beispiel 1 werden mit 26 Teilen Butanonoxim versetzt und bei 70°C solange gerührt, bis der NCO-Gehalt 3,0 % beträgt. Mit 299 Teilen Aceton wird nun das teilblockierte NCO-Vorpolymer verdünnt. In diese Lösung werden jetzt 44 Teile eines Addukts aus 1 Mol Diethanolamin und 1 Mol Acrylamid gegeben; die Lösung wird unter Rückfluß solange gerührt, bis sich IR-spektroskopisch nur noch Spuren freier NCO-Gruppen feststellen lassen. Nach dem Zusatz von 13,2 Teilen Essigsäure werden unter gutem Rühren 1743 Teile Wasser langsam zugegeben. Nach der destillativen Entfernung des Acetons bleibt eine blau-weiße, feinteilige Dispersion mit 30 % Festkörper zurück. Das dispergierte Oligourethan weist einen Gehalt an ternären Ammoniumgruppen von 0,41 %, an tert. Aminstickstoffatomen von 0,06 % und an blockierten Isocyanatgruppen (berechnet als NCO) von 1,7 % auf. Das Äquivalentverhältnis der genannten stickstoffhaltigen Gruppen zu den Isocyanatgruppen liegt bei 1:1,2.

Nach der Methode des Beispiels 1 wird auf einem gebonderten Stahlblech ein Lackfilm erzeugt und getrocknet. Nach 1-stündigem Erhitzen auf 120°C wird ein trockener, harter, klebfreier Film mit einer Stärke von 75 µm erhalten, der gegen Aceton beständig ist.

**Beispiel 5**

220 Teile eines Polyethers aus Bisphenol A und Propylenoxid der OH-Zahl 200 und 300 Teile eines Polypropylenglykols der OH-Zahl 112 werden im Vakuum bei 100°C entwässert und nach dem Abkühlen auf 70°C mit 209 Teilen eines Gemisches aus 2,4- und 2,6-Diisocyanatotoluol (Gewichtsverhältnis 80:20) vermischt und solange gerührt, bis der NCO-Gehalt auf 5,7 % abgefallen ist. Mit 700 Teilen Aceton wird nun das NCO-Vorpolymer verdünnt. In dieser Lösung werden dann 53 Teile eines Addukts aus 1 Mol Diethanolamin und 1 Mol Acrylnitril gegeben; die Lösung wird unter Rückfluß solange gerührt, bis ihr NCO-Gehalt nur noch 1,1 % beträgt.

Es werden nun bei Raumtemperatur 100 Teile eines Addukts aus 134 Teilen 1,1,1-Tris-(hydroxymethyl)-

propan, 522 Teilen 2,4-Diisocyanatotoluol und 339 Teilen ε-Caprolactam zugesetzt. Nach Zusatz von 18,0 Teilen Essigsäure und unter gutem Rühren gibt man nun 1350 Teile Wasser zur Reaktionsmischung. Es entsteht eine weiße Dispersion, die nach der destillativen Entfernung des Acetons einen Festkörpergehalt von 40 % aufweist. Der Festkörper, der sich aus einem Gemisch aus blockiertem Polyisocyanat mit einem, keine blockierte Isocyanatgruppen aufweisenden Oligourethan zusammensetzt, enthält 0,48 % tertiäre Ammoniumgruppen und 1,43 % blockierte Isocyanatgruppen (berechnet als NCO). Das Äquivalentverhältnis der tertiären Ammoniumgruppen zu den Isocyanatgruppen beträgt 1:1.

**Patentansprüche**

1. Gegebenenfalls blockierte Polyisocyanate enthaltende wäßrige Lösungen oder Dispersionen von kationischen, bei erhöhter Temperatur vernetzbaren Oligourethanen, dadurch gekennzeichnet, daß die Oligourethane

a) einen Gehalt an ternären oder quaternären Ammoniumionen (berechnet als Stickstoff, Atomgewicht = 14) in Form von über Urethangruppen endständig und/oder innerhalb des Moleküls eingebauten Struktureinheiten der Formel

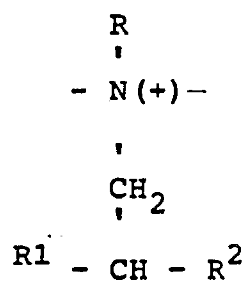

von 0,1 bis 3 Gew.-%, wobei

R für Wasserstoff oder einen aliphatischen, cycloaliphatischen oder araliphatischen Rest steht, wie er bei der Quaternierung von tert. Stickstoffatomen mit Alkylierungs-, Cycloalkylierungs- oder Aralkylierungsmitteln am tert. Stickstoffatom fixiert wird,

$R^1$ für Wasserstoff oder einen Alkylrest mit 1 bis 4 Kohlenstoffatomen steht,

$R^2$ für $-C\equiv N$, $-CO-NH_2$, $-CO-NHR^3$, $-CO-NR_2^3$ oder $-COOR^3$ steht, wobei

$R^3$ einen, gegebenenfalls inerte Substituenten aufweisenden, einwertigen Kohlenwasserstoffrest bedeutet,

b) einen Gehalt an tert. Aminstickstoffatomen (Atomgewicht = 14) in Form von über Urethangruppen endständig und/oder innerhalb des Moleküls eingebauten Struktureinheiten der Formel

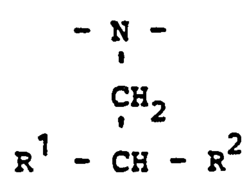

von 0 bis 2,8 Gew.-%, wobei

$R^1$ und $R^2$ die bereits genannte Bedeutung haben und

c) einen Gehalt an blockierten Isocyanatgruppen (berechnet als NCO) von 0 bis 15 Gew.-%

aufweisen, mit der Maßgabe, daß der Gehalt an

a) ternären Ammoniumgruppen,

b) tert. Aminstickstoffatomen und

c) der Summe der im Oligourethan eingebauten und in dem blockierten Polyisocyanat enthaltenen, blockierten Isocyanatgruppen einem Äquivalentverhältnis von (a + b):c von 1:1 bis 1,5:1 entspricht.

2. Verfahren zur Herstellung von wäßrigen Lösungen oder Dispersionen von Oligourethanen gemäß Anspruch 1, dadurch gekennzeichnet, daß man

i) ein, gegebenenfalls Urethangruppen aufweisendes, organisches Polyisocyanat, dessen Isocyanatgruppen gegebenenfalls teilweise in blockierter Form vorliegen, mit Verbindungen der Formel

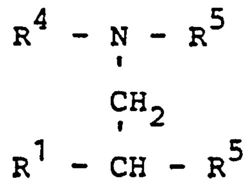

in welcher

$R^1$ und $R^2$ die in Anspruch 1 genannte Bedeutung haben und

$R^4$ und $R^5$ für gleiche oder verschiedene Reste stehen und Kohlenwasserstoffreste mit 1 - 20 Kohlenstoffatomen oder mindestens eine alkoholische Hydroxylgruppe als Substituenten aufweisende Kohlenwasserstoffreste mit 2 bis 20 Kohlenstoffatomen bedeuten, mit der Maßgabe, daß mindestens einer der Reste $R^4$ oder $R^5$ mindestens eine alkoholische Hydroxylgruppe aufweist,

unter Einhaltung eines Äquivalentverhältnisses von freien Isocyanatgruppen zu Hydroxylgruppen von 0,7:1 bis 2,5:1 unter Urethanbildung zur Reaktion bringt,

ii) die tert. Aminstickstoffatome der so erhaltenen Oligourethane durch Neutralisation mit einer Säure oder durch Quaternierung mit einem Quaternierungsmittel teilweise in quaternäre und/oder zumindest teilweise in ternäre Ammoniumgruppen überführt und

iii) die so erhaltenen kationischen Oligourethane in einem wäßrigen Milieu auflöst oder dispergiert,

wobei man gegebenenfalls zu einem beliebigen Zeitpunkt im Verlauf der Herstellung der wäßrigen Lösung oder Dispersion ein organisches Polyisocyanat mit blockierten Isocyanatgruppen hinzufügt.

3. Verwendung der Lösungen oder Dispersionen gemäß Anspruch 1 zur Herstellung von Überzügen auf hitzeresistenten Substraten, dadurch gekennzeichnet, daß man die, gegebenenfalls Hilfs- und Zusatzmittel der Lacktechnologie enthaltenden wäßrigen Lösungen oder Dispersionen auf die Substrate aufbringt und die so erhaltenen Überzüge durch Erhitzen auf bis zu 160°C liegende Temperaturen unter Verdunsten des Wassers und der gegebenenfalls vorliegenden Lösungsmittel und unter Hitzevernetzung des Bindemittels aushärtet.

4. Verwendung gemäß Anspruch 3, dadurch gekennzeichnet, daß man als hitzeresistente Substrate solche einer metallischen Oberfläche verwendet und man die Beschichtung der Substrate durch kathodische Abscheidung bewirkt.

## Claims

1. Aqueous solutions or dispersions, optionally containing blocked polyisocyanates, of cationic oligourethanes which are crosslinkable at elevated temperatures characterised in that the oligourethanes have

a) a content of ternary or quaternary ammonium ions (calculated as nitrogen, atomic weight = 14) in the form of structural units which are incorporated via urethane groups terminally and/or within the molecule and which have the formula

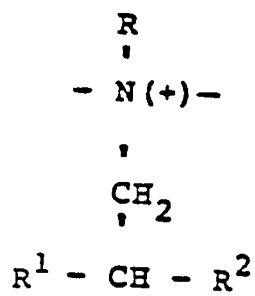

of 0.1 to 3% by weight,

wherein

R represents hydrogen or an aliphatic, cycloaliphatic or araliphatic radical such as is fixed to the tert. nitrogen atom in the quaternisation of tert. nitrogen atoms using alkylating, cycloalkylating or aralkylating agents,

$R^1$ represents hydrogen or an alkyl radical having 1 to 4 carbon atoms

$R^2$ represents $-C \equiv N$, $-CO-NH_2$, $-CO-NHR^3$, $-CO-NR^3_2$ or $-COOR^3$,

wherein

$R^3$ denotes a monovalent hydrocarbon radical which may have inert substituents,

b) a content of tert. amine nitrogen atoms (atomic weight = 14) in the form of structural units which are incorporated via urethane groups terminally and/or within the molecule and which have the formula

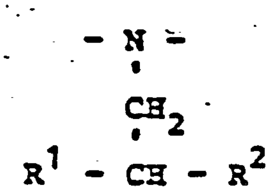

of 0 to 2.8% by weight, wherein

$R^1$ and $R^2$ have the meaning already mentioned and

c) a content of blocked isocyanate groups (calculated as NCO) of 0 to 15% by weight,

with the proviso that the content of

a) ternary ammonium groups

b) tert. amine nitrogen atoms and

c) the sum of the blocked isocyanate groups incorporated in the oligourethane and contained in the blocked polyisocyanate

corresponds to an equivalent ratio of (a + b):c of 1:1 to 1.5:1.

2. Process for the production of aqueous solutions or dispersions of oligourethanes according to Claim 1, characterised in that

i) an organic polyisocyanate which may have urethane groups and the isocyanate groups of which may be partially present in blocked form, is reacted with compounds of the formula

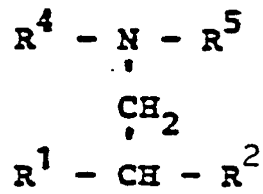

wherein

$R^1$ and $R^2$ have the meaning given in Claim 1 and

$R^4$ and $R^5$ represent the same or different radicals and denote hydrocarbon radicals having 1 to 20 carbon atoms or hydrocarbon radicals having at least one alcoholic hydroxyl group as a substituent and 2 to 20 carbon atoms,

with the proviso that at least one of the radicals $R^4$ or $R^5$ has at least one alcoholic hydroxyl group,

while maintaining an equivalent ratio of free isocyanate groups to hydroxyl groups of 0.7:1 to 2.5:1 with the formation of urethane,

ii) the tert. amine nitrogen atoms of the oligourethanes which are thus obtained are converted partially into quaternary and/or at least partially into ternary ammonium groups by neutralisation using an acid or by quaternisation using a quaternising agent, and

iii) the cationic oligourethanes which are thus obtained are dissolved or dispersed in an aqueous medium,

an organic polyisocyanate having blocked isocyanate groups optionally being added at any time during the production of the aqueous solution or dispersion.

3. Use of the solutions or dispersions according to Claim 1 for the production of coatings on heat-resistant substrates, characterised in that the aqueous solutions or dispersions which may contain auxiliaries and additives from lacquer technology are applied to the substrates and the resulting coatings are hardened by heating to temperatures of up to 160°C with evaporation of the water and the solvents which may be present and with heat cross-linking of the binder.

4. Use according to Claim 3, characterised in that substrates having a metallic surface are used as the heat-resistant substrates and the substrates are coated by cathodic deposition.

**Revendications**

1. Solutions ou dispersions aqueuses, contenant des polyisocyanates éventuellement bloqués, d'oligouréthannes-cationiques réticulables à température élevée, caractérisées en ce que les oligo-uréthannes présentent

a) une teneur en ions ammonium ternaire ou quaternaire (exprimés en azote, poids atomique = 14) sous la forme de motifs structuraux incorporés par l'intermédiaire de groupes uréthanne à l'extrémité et/ou à l'intérieur de la molécule de formule

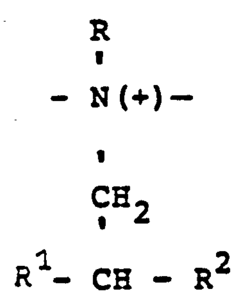

de 0,1 à 3 % en poids,

R représentant un atome d'hydrogène ou un reste aliphatique, cycloaliphatique ou araliphatique tel qu'il est fixé sur l'atome tertiaire d'azote lors de la quaternisation d'atomes tertiaires d'azote avec des agents alkylants,

cycloalkylants ou aralkylants,

$R^1$ représentant l'hydrogène ou un reste alkyle ayant 1 à 4 atomes de carbone,

$R^2$ représentant un groupe $-C{\equiv}N$, $-CO-NH_2$, $-CO-NHR^3$, $-CO-NR_2^3$ ou $-COOR^3$,

$R^3$ désignant un reste hydrocarboné monovalent portant le cas échéant des substituants inertes,

b) une teneur en atomes tertiaires d'azote d'amine (poids atomique = 14) sous la forme de motifs structuraux incorporés par l'intermédiaire de groupes uréthanne à l'extrémité et/ou l'intérieur de la molécule, de formule

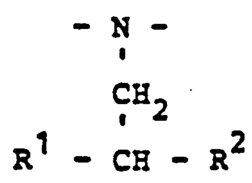

de 0 à 2,8% en poids,

$R^1$ et $R^2$ ayant la définition déjà donnée et

c) une teneur en groupes isocyanato bloqués (exprimés en NCO) de 0 à 15% en poids,

sous réserve que la teneur en

a) groupes ammonium ternaire,

b) atomes d'azote d'amine tertiaires et

c) la somme des groupes isocyanato bloqués incorporés dans l'oligo-uréthanne et contenus dans le polyisocyanate bloqué correspondent à un rapport d'équivalents (a+b):c de 1:1 à 1,5:1.

2. Procédé de préparation de solutions ou dispersions aqueuses d'oligo-uréthannes selon la revendication 1, caractérisé en ce qu'on met en réaction

i) un polyisocyanate organique éventuellement porteur de groupes uréthanne, dont les groupes isocyanato sont éventuellement présents en partie sous la forme bloquée, avec des composés de formule

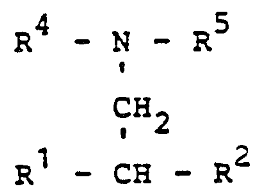

dans laquelle

$R^1$ et $R^2$ ont la définition indiquée dans la revendication 1, et

$R^4$ et $R^5$ représentent des restes identiques ou différents et sont des restes hydrocarbonés ayant 1 à 20 atomes de carbone ou des restes hydrocarbonés de 2 à 20 atomes de carbone présentant au moins un groupe hydroxyle alcoolique comme substituant, sous réserve qu'au moins l'un des restes $R^4$ ou $R^5$ présente au moins un groupe hydroxyle alcoolique,

en maintenant un rapport d'équivalents des groupes isocyanato libres aux groupes hydroxyle de 0,7:1 à 2,5:1 avec formation d'uréthanne,

ii) on transforme les atomes d'azote d'amine tertiaires des oligo-uréthannes obtenus par neutralisation avec un acide ou par quaternisation avec un agent de quaternisation, en partie en groupes ammonium quaternaire et/ou au moins en partie en groupes ammonium ternaire et

iii) on dissout ou disperse les oligo-uréthannes cationiques ainsi obtenus dans un milieu aqueux,

en ajoutant éventuellement à un moment quelconque au cours de la préparation de la solution ou dispersion aqueuse un polyisocyanate organique à groupes isocyanato bloqués.

3. Utilisation des solutions ou dispersions suivant la revendication 1 pour la production de revêtements sur des substrats résistant à la chaleur, caractérisée en ce qu'on applique sur les substrats les solutions ou dispersions aqueuses contenant éventuellement des adjuvants et des additifs de la technologie des peintures et on fait durcir les revêtements ainsi obtenus par chauffage jusqu'à des températures atteignant 160°C avec

évaporation de l'eau et des solvants éventuellement présents et avec réticulation du liant par la chaleur.

4. Utilisation suivant la revendication 3, caractérisée en ce qu'on utilise comme substrats résistant à la chaleur des substrats à surface métallique et on effectue le revêtement des substrats par précipitation cathodique.